# EUROPÄISCHE PATENTSCHRIFT

(11) **EP 3 046 112 B1**
(45) Veröffentlichungstag und Bekanntmachung des Hinweises auf die Patenterteilung: **24.05.2017**
(21) Anmeldenummer: 15000098.2
(22) Anmeldetag: 16.01.2015
(51) Int. Cl.: G21F 5/14, G21F 7/00, G21C 19/105, G21C 19/32, B25J 1/00, B66C 1/00, G21C 19/26, G21C 19/07

(54) **Kernbrennstoffflaschenbergungssystem**
Nuclear fuel bottle recovery system
Système de récupération de flacons de combustible nucléaire

(43) Veröffentlichungstag der Anmeldung: 20.07.2016
(73) Patentinhaber: Westinghouse Electric Germany GmbH, 68167 Mannheim (DE)
(72) Erfinder: Strohmayer, Thomas, 68526 Ladenburg (DE); Weintrager, Udo, 68167 Mannheim (DE)
(74) Vertreter: Eickmeyer, Dietmar

(56) Entgegenhaltungen:
- EP-A1- 0 516 269
- WO-A1-00/71415
- GB-A- 2 408 142
- JP-A- H09 222 492
- WANG DITANG ET AL: "A launch and recovery system for an autonomous underwater vehicle 'Explorer'", PROCEEDINGS OF THE SYMPOSIUM ON AUTONOMOUS UNDERWATER VEHICLE TECHNOLOGY. WASHINGTON, JUNE 2 - 3, 1992; [PROCEEDINGS OF THE SYMPOSIUM ON AUTONOMOUS UNDERWATER VEHICLE TECHNOLOGY], NEW YORK, IEEE, US, Bd. -, 2. Juni 1992 (1992-06-02), Seiten 279-281, XP010065034, DOI: 10.1109/AUV.1992.225222 ISBN: 978-0-7803-0704-9
- HOWLAND J ET AL: "SEA CLIFF/TURTLE Come of Age", OCEANS '76, IEEE, PISCATAWAY, NJ, USA, 13. September 1976 (1976-09-13), Seiten 507-512, XP031634119,

## Beschreibung

Die Erfindung betrifft ein Kernbrennstoffflaschenbergungssystem, umfassend eine in Wasser schwimmfähige Schwimmplattform, eine mit der Schwimmplattform verbundene Abseilvorrichtung sowie einen vertikal durch die Abseilvorrichtung ab- und aufseilbaren Tragrahmen.

Es ist bekannt, dass in nuklearen Kernanlagen, wie beispielsweise einem Kernkraftwerk, abgebrannter nuklearer Brennstoff temporär zwischengelagert wird. Eine derartige Lagerung erfolgt typischerweise in einem Wasserbecken beziehungsweise einem Kernanlagenbecken, welches - je nach örtlichen Gegebenheiten - auch außerhalb eines Gebäudes im Freien liegen kann.

Zur weiteren Steigerung der Sicherheit werden abgebrannte Brennstäbe bedarfsweise zusätzlich in diese umhüllende sogenannte Kernbrennstoffflaschen gelagert, welche vorzugsweise aus einem Metall gefertigt sind. Aufgrund des auch während der Lagerung weiterhin fortschreitenden radioaktiven Zerfalls bilden sich Gase im Innern der Kernbrennstoffflaschen, so dass diese gegebenenfalls unter Druck stehen können. Vor dem Hintergrund einer gegebenenfalls jahrelang fortschreitenden Korrosion der metallischen Kernbrennstoffflaschen sind aus Sicherheitsgründen stärkere Erschütterungen zu vermeiden und die Handhabung der Flaschen ist auf ein Mindestmaß zu reduzieren.

Die Lagerung dieser Kernbrennstoffflaschen erfolgt typischerweise zu mehreren in einem Wasserbecken beziehungsweise einem Kernanlagenbecken in kippmuldenartigen Lagerbehältnissen aus Stahlblech, welche sich ihrerseits mit unbestimmter Position im Kernanlagenbecken befinden. Die Lagerbehältnisse verfügen über vier formidentische Anschlagpunkte zum Transport mit einem Kran. Im Wasser befindliche Schwebstoffe schränken die Sicht im Wasserbecken ein, so dass eine optische Lokalisation der Lagerbehältnisse erschwert ist.
Um den nuklearen Brennstoff, der sich in den Kernbrennstoffflaschen befindet, zu entsorgen, sind die gegebenenfalls in ihrer mechanischen Stabilität durch Korrosion massiv geschwächten und unter Druck stehenden Kernbrennstoffflaschen zu öffnen und aus dem Wasserbecken zu bergen. Dies erfolgt gemäß dem Stand der Technik typischerweise durch Greifwerkzeuge, die mittels am Beckenrand vorhandener Kräne betrieben werden. Nach ihrer Bergung werden die metallischen Kernbrennstoffflaschen stationären Trennvorrichtungen zugeführt, wo sie mittels mechanischer Trennverfahren geöffnet werden. Dies ist neben Zugänglichkeitsaspekten insbesondere auch notwendig, um eventuell im Innenraum der Kernbrennstoffflasche befindliches Gas entweichen bzw. Wasser zur Kühlung einströmen zu lassen.
Nachteilig an dem Stand der Technik ist, dass das Bergungsverfahren aufwändig ist und es zudem zu einer Vielzahl von Erschütterungen der gegebenenfalls maroden Kernbrennstoffflaschen kommen kann.

Eine bereits bekannte Lösung zu Verringerung von Erschütterungen ist der Einsatz einer schwimmenden Bergeplattform, wie sie zum Beispiel im Patentantragsdokument GB 2 408 142 A beschrieben wird.

Ausgehend von diesem Stand der Technik ist es Aufgabe der Erfindung, ein Kernbrennstoffflaschenbergungssystem bereitzustellen, welches besonders flexibel und unabhängig von bestehenden Krananlagen einsetzbar ist und durch welches die handhabungsbedingten Erschütterungen auf ein Minimum reduziert werden. Aufgabe ist es auch, ein Verfahren zum Betrieb eines solchen Systems anzugeben.
Die Aufgabe wird gelöst durch ein Kernbrennstoffflaschenbergungssystem der eingangs genannten Art. Diese ist dadurch gekennzeichnet,
- dass der Tragrahmen dafür vorgesehen ist, auf ein Lagerbehältnis zur Lagerung von Kernbrenstoffflaschen abgesetzt und positioniert zu werden,
- dass der Tragrahmen eine verfahrbare Greifvorrichtung zur selektiven Handhabung von in dem Lagerbehältnis befindlichen Kernbrennstofflaschen aufweist,
- dass die verfahrbare Greifvorrichtung dafür vorgesehen ist, eine aus dem Lagerbehältnis gegriffene Kernbrennstofflasche in einen Trennraum des Tragrahmens zu transportieren,
- dass der Tragrahmen eine Trennvorrichtung zum Öffnen einer im Trennraum befindlichen Kernbrennstofflasche aufweist.

Die Grundidee der Erfindung besteht darin, anstelle eines stationären Kranes und einer stationären Trennvorrichtung eine ferngesteuerte, schwimmfähige Schwimmplattform zu verwenden, welche einen auf Höhe der Lagerbehälter absenkbaren Tragrahmen aufweist, welcher seinerseits bereits eine integrierte Trennvorrichtung zum Öffnen der Kernbrennstofflaschen aufweist. Der Tragrahmen wird direkt über dem im Wasser befindlichen Lagerbehältnis positioniert und bedarfsweise arretiert. Der Tragrahmen ist mit Versorgungsleitungen verbunden, über die die angebauten Gerätschaften versorgt werden können.

Der Transportweg, den die Kernbrennstofflaschen von Beginn ihrer Bergung aus dem Lagerbehältnis bis zu ihrer Öffnung durch die im Tragrahmen integrierte Trennvorrichtung zurücklegen, entspricht in etwa der Höhe des Lagerbehältnisses und beträgt beispielsweise 1 m bis 2m. Nach der Öffnung der Kernbrennstofflaschen besteht kein Risiko mehr von unkontrolliert entweichendem Gas, welches zu einem unkontrollierten Vorschub und damit zu einer unkontrollierten Bewegung der Kernbrennstofflasche führen kann.

In vorteilhafter Weise ist somit der bei der Bergung der Kernbrennstofflaschen von diesen zurückgelegte Weg auf ein Minimum reduziert und überflüssige Erschütterungen vermieden. Selbst für den unwahrscheinlichen Fall, dass während dieses kurzen Transportweges unkontrolliert Gas aus einer maroden korrodierten Kernbrennstofflasche entweichen sollte, besteht dennoch kein Sicherheitsrisiko, weil die Kernbrennstofflasche permanent durch die Greifvorrichtung gehalten ist und das Gas durch seinen Austritt nicht zu einem unkontrollierten Vorschub und damit zu einer unkontrollierten Bewegung der Kernbrennstofflasche führen kann.

Die Schwimmplattform weist idealerweise Auftriebskörper auf. Durch die Verwendung von Auftriebskörpern, welche beispielsweise in mehreren voneinander beabstandeten Gruppen angeordnet sind, ist in vorteilhafter Weise eine hohe Kippstabilität der Schwimmplattform gewährleistet, so dass Kraftbelastungen, welche zum Beispiel durch das Hinterherziehen eines Anschlusskabels auftreten können, die stabile Schwimmlage der Schwimmplattform nicht gefährden. Zur weiteren Vermeidung von dreh- oder kippmomentähnlichen Belastungen ist die Abseilvorrichtung vorzugsweise mittig auf der Schwimmplattform über einem Durchbruch angeordnet, so dass auch der durch den Durchbruch nach unten abseilbare Tragrahmen mit Anbauteilen die stabile Schwimmlage der Schwimmplattform nicht durch ein Kippmoment gefährdet.

Gemäß einer Ausführungsform des erfindungsgemäßen Kernbrennstoffflaschenbergungssystems umfasst der Tragrahmen eine Arretierungsvorrichtung zur formschlüssigen Verbindung mit einem Lagerbehältnis. Hierdurch sind relative Verschiebungen zwischen Lagerbehältnis und Tragrahmen bei der Bergung der Kernbrennstoffflaschen in besonders vorteilhafter Weise vermieden.

Entsprechend einer besonders bevorzugten Variante des erfindungsgemäßen Kernbrennstoffflaschenbergungssystems umfasst dieses ein an seiner oberen Seite offenes Lagerbehältnis zur Lagerung von Kernbrennstoffflaschen, mit welchem der Tragrahmen bei seiner Positionierung zusammenwirkt. Derartige kippmuldenartige Behältnisse - auch Skips genannt - sind im Stand der Technik bekannt und weisen an ihren oberen Eckpunkten typischer Weise vier horizontal ausgerichtete stab- beziehungsweise zylinderähnliche Tragzapfen auf, welche erfindungsgemäß als Zentrierungsvorrichtungen dienen. Hierbei ist der Tragrahmen erfindungsgemäß mit korrespondierenden Zentrierungselementen ausgestattet, beispielsweise einer jeweiligen senkrechten Platte mit einer mittigen sich nach oben verjüngenden keilartigen Aussparung, welche dafür vorgesehen ist, dass ein jeweiliger Tragzapfen darin eingreift, womit die genaue Positionierung und der definierte Sitz des Tragrahmens auf dem Lagerbehältnis in vorteilhafter Weise unterstützt sind.

Gemäß einer besonders bevorzugten Ausgestaltungsvariante des erfindungsgemäßen Kernbrennstoffflaschenbergungssystems umfasst die Greifvorrichtung einen frei verfahr- und drehbaren Greifer. Eine freie Verfahrbarkeit ist beispielsweise durch einen Manipulator erreichbar, welcher eine Bewegung in X-, Y- und Z-Richtung ermöglicht. Eine Drehbarkeit des Greifers ist durch eine zusätzliche Drehvorrichtung erreichbar.

Der Arbeitsbereich des Greifers muss sowohl eine Erreichbarkeit des Trennraumes des auf dem Lagerbehältnis positionierten Tragrahmens als auch des Innenraums des Lagerbehältnisses abdecken. Somit können zu öffnende Kernbrennstoffflaschen mittels der Greifvorrichtung direkt aus dem Lagerbehältnis in den Trennraum verbracht und dort geöffnet werden. Entsprechend einer beispielhaften Größe eines Lagerbehältnisses von 100cm x 100cm x 80cm und einer Höhe des Trennraumes von 30cm ergibt sich beispielsweise ein Arbeitsbereich von 100cm x 100cm x 110cm.

Der Greifer selbst weist beispielsweise zwei gebogene Greiffinger auf, so dass Kernbrennstoffflaschen mit verschiedenen Umfängen sicher gehalten werden können, beispielsweise Durchmesser von 60mm bis 150mm.

Gemäß einer besonders bevorzugten Variante des Kernbrennstoffflaschenbergungssystems weist der Tragrahmen eine Kamera zur Überwachung der Greifvorrichtung und/oder eine Kamera zur Überwachung des Positioniervorgangs des Tragrahmens auf ein Lagerbehältnis auf. Somit lassen sich die typischerweise manuell gesteuerten Greifvorgänge bzw. Positioniervorgänge anhand der erzeugten Kamerabilder präziser und einfacher durchführen. Optional ist auch ein Beleuchtungssystem für die betreffenden Arbeitsbereiche vorgesehen.

Gemäß einer bevorzugten Variante des erfindungsgemäßen Kernbrennstoffflaschenbergungssystems ist die Trennvorrichtung eine Wasserstrahlschneidevorrichtung. Diese können sehr präzise Schnitte auch durch ein dickeres Material durchführen und eignen sich insbesondere auch deshalb, weil die Trennvorrichtung erfindungsgemäß typischerweise während des Trennvorgangs unter Wasser ist. Ohne weitere Einstellarbeit können verschieden große Kernbrennstoffflaschen oder Kernbrennstoffflaschen unterschiedlichen Durchmessers bearbeitet werden.

In weiterhin bevorzugter Weise ist die Wasserstrahlschneidevorrichtung linear verfahrbar und deren Schwenkwinkel auf einen kleinen Wert wie 20° beschränkt. Durch diesen eingeschränkten Wirkbereich des Wasserstrahls ist es ermöglicht, eine Auffangvorrichtung für den Wasserstrahl in den Tragrahmen zu integrieren und so sicher das Beschädigen der Beckenwand durch den Wasserstrahl zu verhindern.

Deshalb ist es gemäß einer bevorzugten Variante des erfindungsgemäßen Kernbrennstoffflaschenbergungssystems vorgesehen, dass der Tragrahmen eine Auffangvorrichtung für den Wasserstrahl aufweist, durch welche dessen Ausbreitung beispielsweise in Richtung Beckenrand unterbunden ist.

Einer weiteren Erfindungsvariante folgend weist die Trennvorrichtung einen Anschlag zur schnellen Positionierung von Kernbrennstoffflaschen auf. Somit ist ein einfacher und beschleunigter Arbeitsablauf gewährleistet.

Gemäß einer besonders bevorzugten Ausgestaltungsvariante des Kernbrennstoffflaschenbergungssystems umfasst die Antriebsvorrichtung der Schwimmplattform wenigstens drei Antriebe, nämlich
- einen Antrieb zum axialen Vorschub und
- zwei Antriebe zum lateralen Verfahren und Drehen der Schwimmplattform.

Ein Antrieb kann beispielsweise ein Vorschubspropeller sein. Mit diesen drei Antrieben ist eine volle Manövrierfähigkeit der Schwimmplattform auf der Wasseroberfläche des Kernanlagenbeckens gewährleistet. Auch ein drehbarer Vorschubpropeller ist ein geeigneter Antrieb. Idealerweise werden Elektromotoren verwendet.

Gemäß einer besonders bevorzugten Variante des Kernbrennstoffflaschenbergungssystems umfasst dieses eine Fernsteuervorrichtung für die Antriebe der Schwimmplattform, die Abseilvorrichtung und/oder die verfahrbare Greifvorrichtung.

Eine Fernsteuervorrichtung für die Antriebe der Schwimmplattform sowie die Abseilvorrichtung ermöglichen ein für das Bedienpersonal gefahrloses Manövrieren der Schwimmplattform im Kernanlagenbecken. Aufgrund der geringen Abmessungen der Schwimmplattform, beispielsweise mit einer Grundfläche von 1,5m x 2m, sind auch Lagerbehältnisse in schwer zugänglichen Bereichen (Randlagen) des Kernanlagenbeckens einfach erreichbar und die darin gelagerten Kernbrennstofflaschen zu öffnen.

Gemäß einer weiteren Ausgestaltungsform des Kernbrennstoffflaschenbergungssystems ist auf der Schwimmplattform wenigstens eine Übersichtskamera vorgesehen, idealerweise wenigstens zwei, nämlich eine in axialer Vorschubsrichtung am Bug und eine in entgegengesetzter Richtung am Heck der Schwimmplattform.

Gemäß einer weiterhin bevorzugten Ausgestaltungsform des Kernbrennstoffflaschenbergungssystems sind die Bilddaten der wenigstens einen Übersichtskamera zu einer Anzeigevorrichtung der Fernsteuervorrichtung übertragbar und dort anzeigbar. Anhand der durch die Kameras gewonnen Bildinformationen, welche der Bedienperson der Schwimmplattform an der Fernsteuervorrichtung zur Verfügung gestellt werden, gestaltet sich eine Fernsteuerung der Schwimmplattform deutlich einfacher. Somit kann während des Absenkens, Hebens die Umgebung der Plattform beobachtet werden. Bilddaten können entweder direkt an der Fernsteuervorrichtung angezeigt werden oder aber auch an einem Bildschirm in Sichtnähe.

Gemäß einer weiteren Ausgestaltungsform des Kernbrennstoffflaschenbergungssystems ist die Schwimmplattform mittels eines in Wasser schwimmfähigen flexiblen Kabelstrangs mit einer externen stationären Übergabeschnittstelle verbunden. Durch die Schwimmfähigkeit des Kabelstrangs ist in vorteilhafter Weise ein Dreh- oder Kippmoment vermeiden, welches die stabile Schwimmlage der Schwimmplattform gefährden könnte. Eine Schwimmfähigkeit kann beispielsweise durch ein Vorsehen von Schwimmkörpern erreicht werden, welche mit dem Kabelstrang verbunden sind. Die Übergabeschnittstelle ist typischerweise durch eine Steckverbindung am Beckenrand gebildet.

Entsprechend einer weiteren Ausgestaltungsform des Kernbrennstoffflaschenbergungssystems umfasst der schwimmfähige Kabelstrang elektrische Versorgungsleitungen zur Versorgung der Schwimmplattform mit elektrischer Energie beziehungsweise auch Datenleitungen insbesondere zum Datenaustausch mit der Fernsteuervorrichtung. Somit sind alle benötigten Versorgungs- und Kommunikationsleitungen zum reibungslosen Betrieb der Schwimmplattform vorhanden. Ein Schaltschrank auf der Plattform dient zur Ansteuerung des Seilzugs, der Antriebe und der Greif- und Trennvorrichtung.

Gemäß einer besonders bevorzugten Ausgestaltungsform des Kernbrennstoffflaschenbergungssystems weist die Schwimmplattform einen Metallrahmen mit beiderseits seiner axialen Mittelachse angeordneten voneinander beabstandeten Auftriebskörpern auf, wobei die Abseilvorrichtung zumindest teilweise in dem zwischen den Auftriebskörpern gebildeten Zwischenraum angeordnet ist. Durch die Verwendung eines Metallrahmens wird die Konstruktion sehr vereinfacht. Es kann beispielsweise eine Vielzahl an kleineren gleichartigen Auftriebskörpern durch den Metallrahmen zu einem großen Auftriebskörper verbunden werden. Durch die beabstandete Anordnung wird die effektive Grundfläche der Schwimmplattform vergrößert und die Schwimmlage dadurch stabilisiert. Der zwischen den Auftriebskörpern gebildete mittige Zwischenraum eignet sich in guter Weise, hierdurch mittig die Abseilvorrichtung zu führen, wodurch die Schwimmstabilität weiter verbessert wird.

Gemäß einer weiteren Ausgestaltungsform des Kernbrennstoffflaschenbergungssystems weist die Schwimmplattform horizontal zumindest teilweise umlaufende Stoßfänger auf. Bei eventuellen Kollisionen mit beispielsweise dem Beckenrand werden hierdurch Stöße in vorteilhafter Weise abgefedert und eine Beschädigung der Schwimmplattform vermieden.

Die erfindungsgemäße Aufgabe wird auch gelöst durch ein Verfahren zum Öffnen von Kernbrennstoffflaschen mit einem Kernbrennstoffflaschenbergungssystem, umfassend
- ein auf dem Grund eines mit Wasser gefüllten Beckens befindliches an seiner oberen Seite offenes Lagerbehältnis, in welchem Kernbrennstoffflaschen gelagert sind,
- eine auf der Wasseroberfläche schwimmende Schwimmplattform,
- eine mit der Schwimmplattform verbundene Abseilvorrichtung,
- einen vertikal durch die Abseilvorrichtung ab- und aufseilbaren Tragrahmen,
- wobei der Tragrahmen eine verfahrbare Greifvorrichtung zur selektiven Handhabung von in dem Lagerbehältnis befindlichen Kernbrennstofflaschen aufweist,
- wobei der Tragrahmen eine Trennvorrichtung zum Öffnen einer in einem Trennraum des Tragrahmens befindlichen Kernbrennstofflasche aufweist
gekennzeichnet durch folgende Schritte:
- Positionieren der Schwimmplattform oberhalb des Lagerbehältnisses,
- Abseilen des Tragrahmens und Positionieren auf dem Lagerbehältnis,
- Greifen einer Kernbrennstoffflasche aus dem Lagerbehältnis mittels der Greifvorrichtung und Transport der Kernbrennstoffflasche in den Trennraum des Tragrahmens,
- Abtrennen wenigstens eines Stückes der Kernbrennstoffflasche mittels der Abtrennvorrichtung.

Die Vorteile dieses Verfahrens wurden bereits im Rahmen des korrespondierenden Kernbrennstoffflaschenbergungssystems erläutert.

In einer erfindungsgemäßen Weiterentwicklung des Verfahrens ist ein erstes an seiner oberen Seite offenes Zusatzbehältnis vorgesehen, wobei folgende Schritte durchzuführen sind:
- Positionieren der Schwimmplattform oberhalb des Lagerbehältnisses,
- Abseilen des Tragrahmens und Positionieren auf dem Lagerbehältnis,
- Greifen einer Kernbrennstoffflasche aus dem ersten Behältnis mittels der Greifvorrichtung und Transport der Kernbrennstoffflasche in den Trennbereich des Tragrahmens,
- Verfahren der Schwimmplattform und Positionieren oberhalb des ersten Zusatzbehältnisses,
- Abseilen des Tragrahmens und Positionieren auf dem ersten Zusatzbehältnis,
- Abtrennen wenigstens eines Stückes der Kernbrennstoffflasche mittels der Abtrennvorrichtung, so dass das abgetrennte Stück in das erste Zusatzbehältnis fällt.

Der Vorteil dieser Variante besteht darin, dass die abgetrennten Stücke der Kernbrennstoffflasche direkt in das als Sammelbehälter vorgesehene erste Zusatzbehältnis fallen.

In einer erfindungsgemäßen Weiterentwicklung des Verfahrens ist ein zweites an seiner oberen Seite offenes Zusatzbehältnis vorgesehen, wobei folgende sich anschließende Zusatzschritte durchzuführen sind:
- Verfahren der Schwimmplattform und Positionieren oberhalb des zweiten Zusatzbehältnisses,
- Abseilen des Tragrahmens und Positionieren auf dem zweiten Zusatzbehältnis,
- Öffnen der Greifvorrichtung und Ablegen des übrigen Teils der Kernbrennstoffflasche in das zweite Behältnis.

Der Vorteil dieser Variante besteht darin, dass die übrigen Teile der Kernbrennstoffflasche direkt in das als Sammelbehälter vorgesehene zweite Zusatzbehältnis abgelegt werden und dann gesammelt aus dem Becken gehoben werden können.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: einen Teil eines ersten exemplarischen Kernbrennstoffflaschenbergungssystems,
- Fig. 2: einen Teil eines zweiten exemplarischen Kernbrennstoffflaschenbergungssystems sowie
- Fig. 3: ein exemplarisches Kernbrennstoffflaschenbergungssystem in einem Becken.

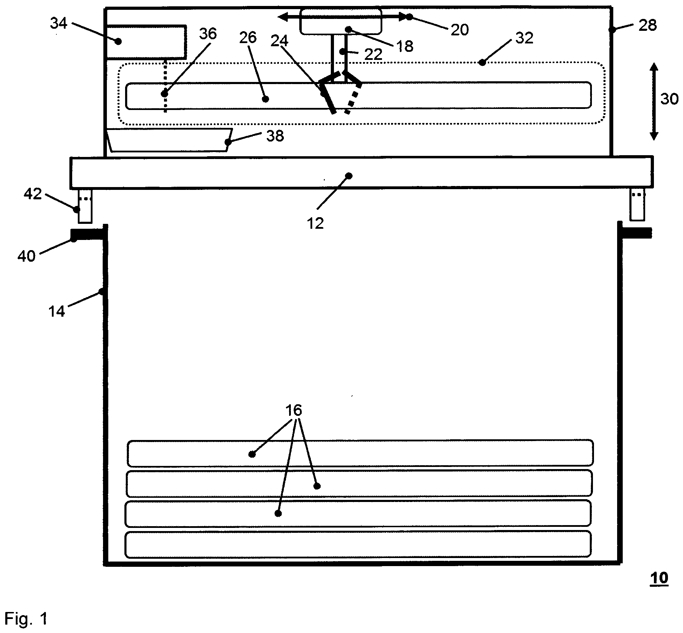

Fig. 1 zeigt einen Teil eines ersten exemplarischen Kernbrennstoffflaschenbergungssystems in einer Ansicht 10. Ein quadratischer Tragrahmen 12, beispielsweise mit einer Kantenlänge von je 1m und gefertigt aus einem Edelstahlprofil mit einem Querschnitt von 4cm x 4cm, befindet sich in bevorzugter Weise waagerechter Ausrichtung in einem geringen Abstand oberhalb eines Lagerbehältnisses 14, in welchem Kernbrennstoffflaschen 16 gelagert sind.

Mit dem Tragrahmen 12 verbunden ist ein Komponentengerüst 28, welches unter anderem eine Greifvorrichtung 18 trägt. Diese umfasst einen längenveränderlichen Greifarm 22 und einen an dessen Ende montierten Greifer 24 und ist unter anderem in einer waagerechten Ebene relativ zum Tragrahmen 12 verfahrbar, wie mit dem Pfeil 20 angedeutet. Somit ist der Greifer 24 in X-, Y- und Z-Richtung frei im Raum relativ zum Tragrahmen 12 verfahrbar. Eine nicht gezeigte Drehvorrichtung ermöglicht zusätzlich eine Drehung des Greifers 24, welcher in dieser Darstellung gerade eine Kernbrennstoffflasche 26 in einem Trennraum 32 gegriffen hält. Der Trennraum 32 ist ein dem Tragrahmen 12 fest zugeordneter Bereich, in welchem dort befindliche Kernbrennstoffflaschen 26 mittels einer Trennvorrichtung 34 geöffnet werden können. In diesem Fall ist die Trennvorrichtung 34 eine Wasserstrahlschneidevorrichtung, wie mit dem Wasserstrahl 36 angedeutet. Unterhalb der Trennvorrichtung 32 ist eine wannenähnliche Auffangvorrichtung 38 angedeutet, welche dazu vorgesehen ist, herabfallende abgetrennte Stücke der der Kernbrennstoffflasche 26 aufzufangen.

Der Tragrahmen 12 ist mittels einer nicht gezeigten Abseilvorrichtung vertikal in Richtung des Pfeils 30 ab- und aufseilbar. Um den Positioniervorgang des Tragrahmens 12 auf dem Lagerbehältnis 14 zu vereinfachen, werden die typischerweise an einem Skip beziehungsweise Lagerbehältnis vorhandenen vier horizontal ausgerichtete Tragzapfen als Zentrierungsvorrichtungen 40 verwendet, wobei der Tragrahmen 12 über komplementäre Zentrierungselemente 42 verfügt, in diesem Fall eine jeweilige senkrechte Platte, welche eine mittige sich nach oben verjüngende keilähnliche Aussparung aufweist, welche dafür vorgesehen ist, dass der jeweilige Tragzapfen darin eingreift.

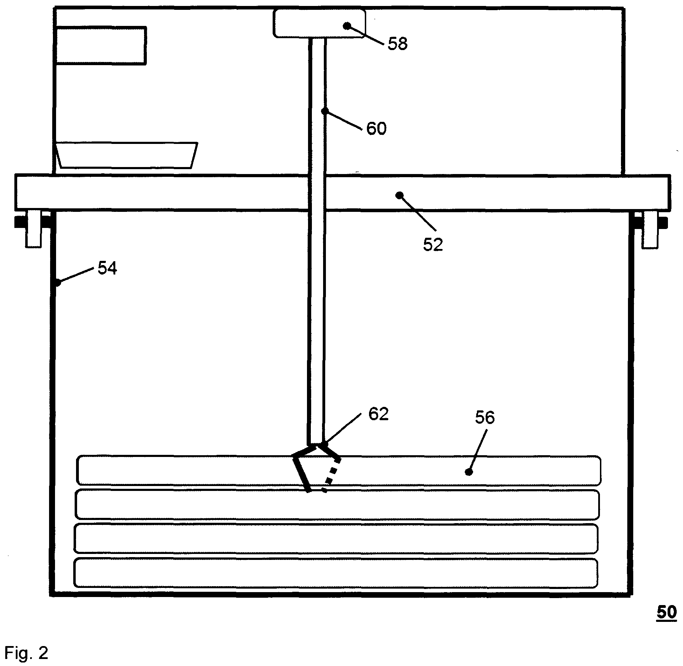

Fig. 2 zeigt einen Teil eines zweiten exemplarischen Kernbrennstoffflaschenbergungssystems in einer Ansicht 50. Ein Tragrahmen 52 ist auf einem Lagerbehältnis 54 positioniert, in welchem Kernbrennstoffflaschen gelagert sind. Eine Greifvorrichtung 58 als Komponente des Tragrahmens 52 weist einen ausgefahrenen Greifarm 60 mit einem Greifer 62 auf, welcher eine im Lagerbehältnis 54 befindliche Kernbrennstoffflasche 56 gegriffen hält. Durch die Verwendung von zapfenähnlichen Zentrierungsvorrichtungen und komplementäre Zentrierungselementen ist eine eindeutige Position des Tragrahmens 52 relativ zum an seiner oberen Seite offenen Lagerbehältnis 54 gewährleistet.

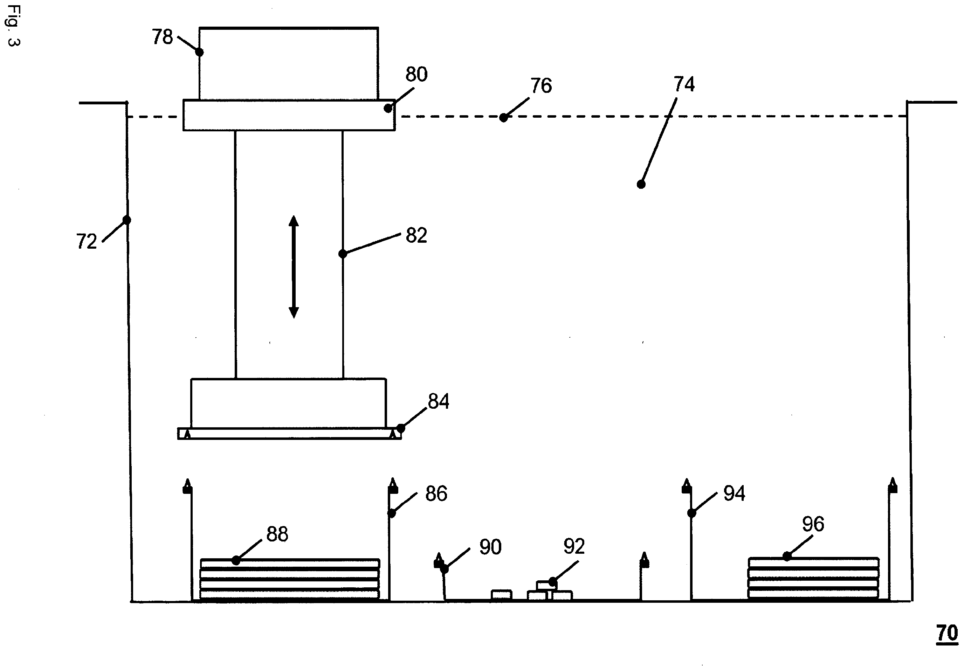

Fig. 3 zeigt ein exemplarisches Kernbrennstoffflaschenbergungssystem in einem mit Wasser 74 gefüllten Becken 72 in einer Darstellung 70. Eine fernsteuerbare Schwimmplattform 78 mit Auftriebskörpern 80 schwimmt auf der Wasseroberfläche 76. Die Schwimmplattform umfasst eine Abseilvorrichtung 82, wie in diesem Fall mit zwei Seilen angedeutet, wobei selbstverständlich weitere Komponenten wie beispielsweise eine fernsteuerbare Seilwinde vorhanden sind.

Am unteren Ende der Seile der Abseilvorrichtung 82 hängt ein Tragrahmen 84, welcher über eine nicht gezeigte Greifvorrichtung sowie eine integrierte Trennvorrichtung verfügt. Der Tragrahmen befindet sich oberhalb eines auf dem Beckengrund vorhandenen oben offenen Lagerbehältnisses 86, auf welchem er durch einen weiteren Abseilvorgang positioniert werden kann. Innerhalb des Lagerbehältnisses sind zu bergende Kernbrennstoffflaschen 88 gelagert.

Auf dem Beckengrund befindet sich weiterhin ein erstes Zusatzbehältnis 90 mit derselben Grundfläche und denselben Zentrierungsvorrichtungen wie das Lagerbehältnis 86. Somit ist es möglich, nach Ergreifen einer Kernbrennstoffflasche 88 aus dem Lagerbehältnis 86 den Tragrahmen mittels der Schwimmplattform zu verfahren und auf dem ersten Zusatzbehältnis 90 zu positionieren, wo dann ein Trennvorgang erfolgt. Abgetrennte Stücke 92 von Kernbrennstoffflaschen 88 fallen schwerkraftbedingt in das erste Zusatzbehältnis und können anschließend zusammen aus dem Becken 72 gehoben werden.

Weiterhin auf dem Beckengrund befindlich ist ein oben offenes zweites Zusatzbehältnis 94, in welchem die übrigen Teile 96 der geöffneten Kernbrennstoffflaschen gelagert werden und welches ebenfalls dieselbe Grundfläche und aufweist, wie das Lagerbehältnis 86.

### Bezugszeichenliste

- 10: Teil eines ersten exemplarischen Kernbrennstoffflaschenbergungssystems
- 12: Tragrahmen
- 14: Lagerbehältnis
- 16: gelagerte Kernbrennstoffflaschen
- 18: Greifvorrichtung
- 20: Verfahrrichtung von Greifvorrichtung
- 22: Greifarm von Greifvorrichtung
- 24: Greifer von Greifvorrichtung
- 26: gegriffene Kernbrennstoffflasche
- 28: Komponentengerüst
- 30: Auf- und Abseilrichtung von Tragrahmen
- 32: Trennraum
- 34: Trennvorrichtung
- 36: Wasserstrahl
- 38: Auffangvorrichtung
- 40: Zentrierungsvorrichtung
- 42: Zentrierungselement
- 50: Teil eines zweiten exemplarischen Kernbrennstoffflaschenbergungssystems
- 52: Tragrahmen
- 54: Lagerbehältnis
- 56: gegriffene Kernbrennstoffflasche
- 58: Greifvorrichtung
- 60: Greifarm von Greifvorrichtung
- 62: Greifer
- 70: exemplarisches Kernbrennstoffflaschenbergungssystem in Becken
- 72: Becken
- 74: Wasser
- 76: Wasseroberfläche
- 78: Schwimmplattform
- 80: Auftriebskörper von Schwimmvorrichtung
- 82: Abseilvorrichtung
- 84: Tragrahmen
- 86: Lagerbehältnis
- 88: gelagerte Kernbrennstoffflaschen
- 90: erstes Zusatzbehältnis
- 92: abgetrenntes Stück von Kernbrennstoffflasche
- 94: zweites Zusatzbehältnis
- 96: übriger Teil von Kernbrennstoffflasche

## Patentansprüche

1. Kernbrennstoffflaschenbergungssystem (10, 50), umfassend
• eine in Wasser (74) schwimmfähige Schwimmplattform (78),
• eine mit der Schwimmplattform (78) verbundene Abseilvorrichtung (82),
• einen vertikal durch die Abseilvorrichtung ab- und aufseilbaren (30) Tragrahmen (12, 52, 80),
• der Tragrahmen (12, 52, 80) dafür geeignet, auf ein Lagerbehältnis (14, 54, 86) zur Lagerung von Kernbrenstoffflaschen (16, 26, 56, 88) abgesetzt und positioniert zu werden,
• der Tragrahmen (12, 52, 80) weist eine verfahrbare (20) Greifvorrichtung (18, 58) zur selektiven Handhabung von in dem Lagerbehältnis (14, 54, 86) befindlichen Kernbrennstofflaschen (16, 26, 56, 88) auf,
**dadurch gekennzeichnet,**
• **dass** die verfahrbare (20) Greifvorrichtung (18, 58) dafür geeignet ist, eine aus dem Lagerbehältnis (14, 54, 86) gegriffene Kernbrennstofflasche (16, 26, 56, 88) in einen Trennraum (32) des Tragrahmens (12, 52, 80) zu transportieren,
• **dass** der Tragrahmen (12, 52, 80) eine Trennvorrichtung (34) zum Öffnen einer im Trennraum (32) befindlichen Kernbrennstofflasche (16, 26, 56, 88) aufweist.

2. Kernbrennstoffflaschenbergungssystem nach Anspruch 1, **dadurch gekennzeichnet, dass** der Tragrahmen (12, 52, 80) eine Arretierungsvorrichtung zur kraftschlüssigen Verbindung mit einem Lagerbehältnis (14, 54, 86) umfasst.

3. Kernbrennstoffflaschenbergungssystem nach Anspruch 1 oder 2, **dadurch gekennzeichnet, dass** dieses ein an seiner oberen Seite offenes Lagerbehältnis (14, 54, 86) zur Lagerung von Kernbrennstoffflaschen (16, 26, 56, 88) umfasst.

4. Kernbrennstoffflaschenbergungssystem nach Anspruch 3, **dadurch gekennzeichnet, dass** um die obere offene Seite des Lagerbehältnisses (14, 54, 86) horizontal ausgerichtete stab- bzw. kegelähnlichen Zentrierungsvorrichtungen (40) vorgesehen sind, wobei der Tragrahmen (12, 52, 80) mit korrespondierenden Zentrierungselementen (42) ausgestattet ist.

5. Kernbrennstoffflaschenbergungssystem nach einem der vorherigen Ansprüche, **dadurch gekennzeichnet, dass** die Greifvorrichtung (18, 58) einen frei verfahr- und drehbaren Greifer (24, 62) umfasst.

6. Kernbrennstoffflaschenbergungssystem nach einem der vorherigen Ansprüche, **dadurch gekennzeichnet, dass** der Tragrahmen (12, 52, 80) eine Kamera zur Überwachung der Greifvorrichtung (18, 58) und/oder eine Kamera zur Überwachung des Positioniervorgangs des Tragrahmens (12, 52, 80) auf ein Lagerbehältnis (14, 54, 86) aufweist.

7. Kernbrennstoffflaschenbergungssystem nach einem der vorherigen Ansprüche, **dadurch gekennzeichnet, dass** die Trennvorrichtung (34) eine Wasserstrahlschneidevorrichtung ist.

8. Kernbrennstoffflaschenbergungssystem nach Anspruch 7, **dadurch gekennzeichnet, dass** die Wasserstrahlschneidevorrichtung linear verfahrbar ist und deren Schwenkwinkel auf einen kleinen Wert wie 20° beschränkt ist.

9. Kernbrennstoffflaschenbergungssystem nach einem der vorherigen Ansprüche, **dadurch gekennzeichnet, dass** der Tragrahmen (12, 52, 80) eine Auffangvorrichtung (38) für den Wasserstrahl (36) aufweist.

10. Kernbrennstoffflaschenbergungssystem nach einem der vorherigen Ansprüche, **dadurch gekennzeichnet, dass** die Trennvorrichtung (34) einen Anschlag zur schnellen Positionierung von Kernbrennstoffflaschen (16, 26, 56, 88) aufweist.

11. Kernbrennstoffflaschenbergungssystem nach einem der vorherigen Ansprüche, **dadurch gekennzeichnet, dass** die Schwimmplattform (78) wenigstens drei Antriebe umfasst, nämlich
• einen zum axialen Vorschub und
• zwei zum lateralen Verfahren und Drehen der Schwimmplattform (78).

12. Kernbrennstoffflaschenbergungssystem nach einem Anspruch 11, **dadurch gekennzeichnet, dass** dieses eine Fernsteuervorrichtung für die Antriebe der Schwimmplattform (78), die Abseilvorrichtung (82) und/oder die verfahrbare Greifvorrichtung (18, 58) umfasst.

13. Verfahren zum Öffnen von Kernbrennstoffflaschen (16, 26, 56, 88) mit einem Kernbrennstoffflaschenbergungssystem, umfassend
• ein auf dem Grund eines mit Wasser (74) gefüllten Beckens (72) befindliches an seiner oberen Seite offenes Lagerbehältnis (14, 54, 86), in welchem Kernbrenstoffflaschen (16, 26, 56, 88) gelagert sind,
• eine auf der Wasseroberfläche (76) schwimmende Schwimmplattform (78),
• eine mit der Schwimmplattform (78) verbundene Abseilvorrichtung (82),
• einen vertikal durch die Abseilvorrichtung (82) ab- und aufseilbaren (30) Tragrahmen (12, 52, 80),
• wobei der Tragrahmen (12, 52, 80) eine verfahrbare (20) Greifvorrichtung (18, 58) zur selektiven Handhabung von in dem Lagerbehältnis (14, 54, 86) befindlichen Kernbrennstofflaschen (16, 26, 56, 88) aufweist,
• wobei der Tragrahmen (12, 52, 80) eine Trennvorrichtung (34) zum Öffnen einer in einem Trennraum (32) des Tragrahmens (12, 52, 80) befindlichen Kernbrennstofflasche (16, 26, 56, 88) aufweist,
• Positionieren der Schwimmplattform (78) oberhalb des Lagerbehältnisses (14, 54,86),
• Abseilen des Tragrahmens (12, 52, 80) und Positionieren auf dem Lagerbehältnis (14, 54, 86),
**gekennzeichnet durch** folgende Schritte:
• Greifen einer Kernbrennstoffflasche (16, 26, 56, 88) aus dem Lagerbehältnis (14, 54, 86) mittels der Greifvorrichtung (18, 58) und Transport der Kernbrennstoffflasche (16, 26, 56, 88) in den Trennraum (32) des Tragrahmens (12, 52, 80),
• Abtrennen wenigstens eines Stückes der Kernbrennstoffflasche (16, 26, 56, 88) mittels der Abtrennvorrichtung (34).

14. Verfahren zum Öffnen von Kernbrennstoffflaschen mit einem Kernbrennstoffflaschenbergungssystem wie in Anspruch 13 definiert, wobei ein erstes an seiner oberen Seite offenes Zusatzbehältnis (90) vorgesehen ist,
**gekennzeichnet durch** folgende Schritte:
• Positionieren der Schwimmplattform (78) oberhalb des Lagerbehältnisses (14, 54, 86),
• Abseilen des Tragrahmens (12, 52, 80) und Positionieren auf dem Lagerbehältnis (14, 54, 86),
• Greifen einer Kernbrennstoffflasche (16, 26, 56, 88) aus dem ersten Behältnis (90) mittels der Greifvorrichtung (18, 58) und Transport der Kernbrennstoffflasche (16, 26, 56, 88) in den Trennbereich (32) des Tragrahmens (12, 52, 80),
• Verfahren der Schwimmplattform (78) und Positionieren oberhalb des ersten Zusatzbehältnisses (90),
• Abseilen des Tragrahmens (12, 52, 80) und Positionieren auf dem ersten Zusatzbehältnis (90),
• Abtrennen wenigstens eines Stückes der Kernbrennstoffflasche (16, 26, 56, 88) mittels der Abtrennvorrichtung (34), so dass das abgetrennte Stück (92) in das erste Zusatzbehältnis (90) fällt.

15. Verfahren zum Öffnen von Kernbrennstoffflaschen nach Anspruch 14, wobei ein zweites an seiner oberen Seite offenes Zusatzbehältnis (94) vorgesehen ist, umfassend folgende sich anschließende Zusatzschritte:
• Verfahren der Schwimmplattform (78) und Positionieren oberhalb des zweiten Zusatzbehältnisses (94),
• Abseilen des Tragrahmens (12, 52, 80) und Positionieren auf dem zweiten Zusatzbehältnis (94),
• Öffnen der Greifvorrichtung (18, 58) und Ablegen des übrigen Teils der Kernbrenstoffflasche (16, 26, 56, 88) in das zweite Behältnis (94).

## Claims

1. Nuclear fuel bottle recovery system (10, 50), comprising
• a floating platform (78) that can float in water (74),
• a winching device (82) connected to the floating platform (78),
• a carrying frame (12, 52, 80) that can be winched vertically down and up (30) by the winching device,
• the carrying frame (12, 52, 80) is suitable for being set down and positioned on a storage container (14, 54, 86) for storing nuclear fuel bottles (16, 26, 56, 88),
• the carrying frame (12, 52, 80) has a displaceable (20) gripping device (18, 58) for selectively handling nuclear fuel bottles (16, 26, 56, 88) located in the storage container (14, 54, 86),
**characterized**
• **in that** the displaceable (20) gripping device (18, 58) is suitable for transporting a nuclear fuel bottle (16, 26, 56, 88) gripped from the storage container (14, 54, 86) into a separating space (32) of the carrying frame (12, 52, 80),
• **in that** the carrying frame (12, 52, 80) has a separating device (34) for opening a nuclear fuel bottle (16, 26, 56, 88) located in the separating space (32).

2. Nuclear fuel bottle recovery system according to Claim 1, **characterized in that** the carrying frame (12, 52, 80) comprises an arresting device for frictionally engaging connection to a storage container (14, 54, 86).

3. Nuclear fuel bottle recovery system according to Claim 1 or 2, **characterized in that** it comprises a storage container (14, 54, 86) which is open on its upper side and intended for the storage of nuclear fuel bottles (16, 26, 56, 88).

4. Nuclear fuel bottle recovery system according to Claim 3, **characterized in that** rod- or cone-like centring devices (40) are provided, aligned horizontally around the upper open side of the storage container (14, 54, 86), the carrying frame (12, 52, 80) being provided with corresponding centring elements (42).

5. Nuclear fuel bottle recovery system according to one of the preceding claims, **characterized in that** the gripping device (18, 58) comprises a freely displaceable and rotatable gripper (24, 62).

6. Nuclear fuel bottle recovery system according to one of the preceding claims, **characterized in that** the carrying frame (12, 52, 80) has a camera for monitoring the gripping device (18, 58) and/or a camera for monitoring the operation of positioning the carrying frame (12, 52, 80) onto a storage container (14, 54, 86).

7. Nuclear fuel bottle recovery system according to one of the preceding claims, **characterized in that** the separating device (34) is a water-jet cutting device.

8. Nuclear fuel bottle recovery system according to Claim 7, **characterized in that** the water-jet cutting device is linearly displaceable and the pivoting angle thereof is restricted to a small value such as 20°.

9. Nuclear fuel bottle recovery system according to one of the preceding claims, **characterized in that** the carrying frame (12, 52, 80) has a collecting device (38) for the water jet (36).

10. Nuclear fuel bottle recovery system according to one of the preceding claims, **characterized in that** the separating device (34) has a stop for the rapid positioning of nuclear fuel bottles (16, 26, 56, 88).

11. Nuclear fuel bottle recovery system according to one of the preceding claims, **characterized in that** the floating platform (78) comprises at least three drives, specifically
• one for the axial advancement and
• two for the lateral displacement and rotation of the floating platform (78).

12. Nuclear fuel bottle recovery system according to Claim 11, **characterized in that** it comprises a remote control device for the drives of the floating platform (78), the winching device (82) and/or the displaceable gripping device (18, 58).

13. Method for opening nuclear fuel bottles (16, 26, 56, 88) by a nuclear fuel bottle recovery system, comprising
• a storage container (14, 54, 86), which is located on the bottom of a tank (72) filled with water (74), is open on its upper side and in which nuclear fuel bottles (16, 26, 56, 88) are stored,
• a floating platform (78) floating on the surface of the water (76),
• a winching device (82) connected to the floating platform (78),
• a carrying frame (12, 52, 80) that can be winched vertically down and up (30) by the winching device (82),
• the carrying frame (12, 52, 80) having a displaceable (20) gripping device (18, 58) for selectively handling nuclear fuel bottles (16, 26, 56, 88) located in the storage container (14, 54, 86),
• the carrying frame (12, 52, 80) having a separating device (34) for opening a nuclear fuel bottle (16, 26, 56, 88) located in a separating space (32) of the carrying frame (12, 52, 80),
• positioning the floating platform (78) above the storage container (14, 54, 86),
• winching down the carrying frame (12, 52, 80) and positioning it on the storage container (14, 54, 86),
**characterized by** the following steps:
• gripping a nuclear fuel bottle (16, 26, 56, 88) from the storage container (14, 54, 86) by means of the gripping device (18, 58) and transporting the nuclear fuel bottle (16, 26, 56, 88) into the separating space (32) of the carrying frame (12, 52, 80),
• removing at least a piece of the nuclear fuel bottle (16, 26, 56, 88) by means of the separating device (34).

14. Method for opening nuclear fuel bottles by a nuclear fuel bottle recovery system as defined in Claim 13, a first additional container (90), which is open on its upper side, being provided,
**characterized by** the following steps:
• positioning the floating platform (78) above the storage container (14, 54, 86),
• winching down the carrying frame (12, 52, 80) and positioning it on the storage container (14, 54, 86),
• gripping a nuclear fuel bottle (16, 26, 56, 88) from the first container (90) by means of the gripping device (18, 58) and transporting the nuclear fuel bottle (16, 26, 56, 88) into the separating region (32) of the carrying frame (12, 52, 80),
• displacing the floating platform (78) and positioning it above the first additional container (90),
• winching down the carrying frame (12, 52, 80) and positioning it on the first additional container (90),
• removing at least a piece of the nuclear fuel bottle (16, 26, 56, 88) by means of the separating device (34), so that the removed piece (92) falls into the first additional container (90).

15. Method for opening nuclear fuel bottles according to Claim 14, a second additional container (94), which is open on its upper side, being provided, comprising the following subsequent additional steps:
• displacing the floating platform (78) and positioning it above the second additional container (94),
• winching down the carrying frame (12, 52, 80) and positioning it on the second additional container (94),
• opening the gripping device (18, 58) and depositing the remaining part of the nuclear fuel bottle (16, 26, 56, 88) in the second container (94) .

## Revendications

1. Système de récupération de flacons de combustible nucléaire (10, 50), comprenant
- une plate-forme flottante (78) pouvant flotter sur l'eau (74),
- un dispositif de descente (82) connecté à la plate-forme flottante (78),
- un cadre de support (12, 52, 80) pouvant être descendu et remonté (30) verticalement au moyen du dispositif de descente,
- le cadre de support (12, 52, 80) étant approprié pour être posé et positionné sur un récipient de stockage (14, 54, 86) pour le stockage de flacons de combustible nucléaire (16, 26, 56, 88),
- le cadre de support (12, 52, 80) présentant un dispositif de préhension (18, 58) pouvant être déplacé (20) pour la manipulation sélective de flacons de combustible nucléaire (16, 26, 56, 88) se trouvant dans le récipient de stockage (14, 54, 86),
**caractérisé en ce que**
- le dispositif de préhension (18, 58) pouvant être déplacé (20) est approprié pour transporter un flacon de combustible nucléaire (16, 26, 56, 88) prélevé du récipient de stockage (14, 54, 86) dans un espace de séparation (32) du cadre de support (12, 52, 80),
- le cadre de support (12, 52, 80) présente un dispositif de séparation (34) pour l'ouverture d'un flacon de combustible nucléaire (16, 26, 56, 88) se trouvant dans l'espace de séparation (32) .

2. Système de récupération de flacons de combustible nucléaire selon la revendication 1, **caractérisé en ce que** le cadre de support (12, 52, 80) comprend un dispositif de blocage pour la connexion par engagement par correspondance de force à un récipient de stockage (14, 54, 86).

3. Système de récupération de flacons de combustible nucléaire selon la revendication 1 ou 2, **caractérisé en ce que** celui-ci comprend un récipient de stockage (14, 54, 86) ouvert au niveau de son côté supérieur pour le stockage de flacons de combustible nucléaire (16, 26, 56, 88).

4. Système de récupération de flacons de combustible nucléaire selon la revendication 3, **caractérisé en ce que** des dispositifs de centrage (40) en forme de barres ou de cônes orientés horizontalement autour du côté supérieur ouvert du récipient de stockage (14, 54, 86) sont prévus, le cadre de support (12, 52, 80) étant muni d'éléments de centrage correspondants (42).

5. Système de récupération de flacons de combustible nucléaire selon l'une quelconque des revendications précédentes, **caractérisé en ce que** le dispositif de préhension (18, 58) comprend un élément de préhension (24, 62) pouvant être déplacé et tourné librement.

6. Système de récupération de flacons de combustible nucléaire selon l'une quelconque des revendications précédentes, **caractérisé en ce que** le cadre de support (12, 52, 80) présente une caméra pour surveiller le dispositif de préhension (18, 58) et/ou une caméra pour surveiller l'opération de positionnement du cadre de support (12, 52, 80) sur un récipient de support (14, 54, 86) .

7. Système de récupération de flacons de combustible nucléaire selon l'une quelconque des revendications précédentes, **caractérisé en ce que** le dispositif de séparation (34) est un dispositif de découpe à jet d'eau.

8. Système de récupération de flacons de combustible nucléaire selon la revendication 7, **caractérisé en ce que** le dispositif de découpe à jet d'eau peut être déplacé linéairement et son angle de pivotement est limité à une petite valeur telle que 20°.

9. Système de récupération de flacons de combustible nucléaire selon l'une quelconque des revendications précédentes, **caractérisé en ce que** le cadre de support (12, 52, 80) présente un dispositif de récupération (38) pour le jet d'eau (36) .

10. Système de récupération de flacons de combustible nucléaire selon l'une quelconque des revendications précédentes, **caractérisé en ce que** le dispositif de séparation (34) présente une butée pour un positionnement rapide de flacons de combustible nucléaire (16, 26, 56, 88).

11. Système de récupération de flacons de combustible nucléaire selon l'une quelconque des revendications précédentes, **caractérisé en ce que** la plate-forme flottante (78) comprend au moins trois entraînements, à savoir
- un entraînement pour l'avance axiale et
- deux entraînements pour le déplacement latéral et la rotation latérale de la plate-forme flottante (78).

12. Système de récupération de flacons de combustible nucléaire selon la revendication 11, **caractérisé en ce que** celui-ci comprend un dispositif de commande à distance pour les entraînements de la plate-forme flottante (78), du dispositif de descente (82) et/ou du dispositif de préhension déplaçable (18, 58).

13. Procédé pour ouvrir des flacons de combustible nucléaire (16, 26, 56, 88) avec un système de récupération de flacons de combustible nucléaire, comprenant
- un récipient de stockage (14, 54, 86) ouvert au niveau de son côté supérieur, se trouvant au fond d'un bassin (72) rempli d'eau (74), dans lequel sont stockés des flacons de combustible nucléaire (16, 26, 56, 88),
- une plate-forme flottante (78) flottant à la surface de l'eau (76),
- un dispositif de descente (82) connecté à la plate-forme flottante (78),
- un cadre de support (12, 52, 80) pouvant être monté et descendu (30) verticalement au moyen du dispositif de descente (82),
- le cadre de support (12, 52, 80) présentant un dispositif de préhension (18, 58) pouvant être déplacé (20) pour la manipulation sélective de flacons de combustible nucléaire (16, 26, 56, 88) se trouvant dans le récipient de stockage (14, 54, 86),
- le cadre de support (12, 52, 80) présentant un dispositif de séparation (34) pour ouvrir un flacon de combustible nucléaire (16, 26, 56, 88) se trouvant dans un espace de séparation (32) du cadre de support (12, 52, 80),
- le positionnement de la plate-forme flottante (78) au-dessus du récipient de stockage (14, 54, 86),
- la descente du cadre de support (12, 52, 80) et le positionnement sur le récipient de stockage (14, 54, 86),
**caractérisé par** les étapes suivantes :
- prélèvement d'un flacon de combustible nucléaire (16, 26, 56, 88) hors du récipient de stockage (14, 54, 86) au moyen du dispositif de préhension (18, 58) et transport du flacon de combustible nucléaire (16, 26, 56, 88) dans l'espace de séparation (32) du cadre de support (12, 52, 80),
- séparation d'au moins une partie du flacon de combustible nucléaire (16, 26, 56, 88) au moyen du dispositif de séparation (34).

14. Procédé pour ouvrir des flacons de combustible nucléaire comprenant un système de récupération de flacons de combustible nucléaire selon la revendication 13, dans lequel un premier récipient supplémentaire (90) ouvert au niveau de son côté supérieur est prévu,
**caractérisé par** les étapes suivantes :
- le positionnement de la plate-forme flottante (78) au-dessus du récipient de stockage (14, 54, 86),
- la descente du cadre de support (12, 52, 80) et le positionnement sur le récipient de stockage (14, 54, 86),
- prélèvement d'un flacon de combustible nucléaire (16, 26, 56, 88) hors du premier récipient (90) au moyen du dispositif de préhension (18, 58) et transport du flacon de combustible nucléaire (16, 26, 56, 88) dans la région de séparation (32) du cadre de support (12, 52, 80),
- déplacement de la plate-forme flottante (78) et positionnement au-dessus du premier récipient supplémentaire (90),
- descente du cadre de support (12, 52, 80) et positionnement sur le premier récipient supplémentaire (90),
- séparation d'au moins une partie du flacon de combustible nucléaire (16, 26, 56, 88) au moyen du dispositif de séparation (34), de telle sorte que la partie séparée (92) tombe dans le premier récipient supplémentaire (90).

15. Procédé pour ouvrir des flacons de combustible nucléaire selon la revendication 14, dans lequel un deuxième récipient supplémentaire (94) ouvert au niveau de son côté supérieur est prévu, comprenant les étapes supplémentaires suivantes :
- déplacement de la plate-forme flottante (78) et positionnement au-dessus du deuxième récipient supplémentaire (94),
- descente du cadre de support (12, 52, 80) et positionnement sur le deuxième récipient supplémentaire (94),
- ouverture du dispositif de préhension (18, 58) et dépose de la partie restante du flacon de combustible nucléaire (16, 26, 56, 88) dans le deuxième récipient (94).
